# EUROPEAN PATENT APPLICATION

(11) **EP 4 751 961 A2**
(43) Date of publication of application: **03.06.2026**
(21) Application number: 25218136.7
(22) Date of filing: 24.11.2025
(51) Int. Cl.: B60K 25/00, B60K 6/12, B60K 17/10, E02F 9/20

(54) **MATERIAL PROCESSING APPARATUS WITH IMPROVED HYBRID POWER SYSTEM**

(30) Priority: 27.11.2024 GB 202417425
(71) Applicant: Terex GB Limited, Dungannon County Tyrone BT71 4DR (GB)
(72) Inventor: FANNING, Ciaran, Belfast, BT9 5QW (GB); McCANN, Declan, Dungannon, BT71 4DR (GB)
(74) Representative: FRKelly

(57) **Abstract**

A mobile material processing apparatus comprises a hydraulic circuit with a first hydraulic pump for powering the tracks. The hydraulic pump is coupled to an internal combustion engine by a hydraulically operated clutch. The clutch is operated by a hydraulic circuit that includes an electrically powered hydraulic pump powered by an electrical power supply system. When it is not required to move the apparatus using the tracks, the clutch is disengaged to prevent the first hydraulic pump from passively pumping oil without providing useful work.

## Description

### FIELD OF THE INVENTION

The present invention relates to hybrid power systems and machines with hybrid power systems. The invention relates particularly but not exclusively to material processing apparatus with hybrid power systems.

### BACKGROUND TO THE INVENTION

Machines such as material processing apparatus conventionally include a diesel engine, an electrical system and a hydraulic system. Conventionally, the diesel engine may provide mechanical power to a main processing unit, for example a screening apparatus, of the apparatus, and also to the wheels or tracks in cases where the apparatus is mobile. The diesel engine may power the electrical system via an alternator, and may also power the hydraulic system via a hydraulic pump and hydraulic motors.

For environmental reasons, it is desirable to minimise the use of internal combustion engines (ICE), and in particular diesel engines. Accordingly, it is desirable to provide alternative power systems and to use electrically powered components where practical. However, because of the typical power requirements of some material processing apparatus, replacing the diesel engine with electrical motors, or using a conventional diesel-electric hybrid system, can be cost prohibitive and/or impractical. In particular, for tracked quarrying plant there is currently no cost-effective solution for electrically powering the tracks due to high loads and frequency of use.

It would be desirable to mitigate the problems outlined above.

### SUMMARY OF THE INVENTION

From a first aspect the invention provides a mobile material processing apparatus comprising:
an internal combustion engine;
an electrical power supply system;
a hydraulic power supply system; and
hydraulically powered ground-engaging conveying means for moving the apparatus with respect to a ground surface, wherein said hydraulic power supply system comprises a hydraulic circuit for providing hydraulic power to said ground-engaging conveying means, said hydraulic circuit including a first hydraulic pump, and wherein said first hydraulic pump is coupled to said internal combustion engine by a hydraulically operated coupling device that is operable to selectively transmit mechanical power to said first hydraulic pump from said internal combustion engine, or prevent transmission of mechanical power to said first hydraulic pump from said internal combustion engine, and wherein said hydraulic power supply system further includes a hydraulic circuit for providing hydraulic power to operate said hydraulically operated coupling device, said hydraulic circuit including an electrically powered hydraulic pump powered by said electrical power supply system.

Typically, said first hydraulic pump is coupled to said internal combustion engine by transmission means, preferably comprising a gearbox. Typically, the hydraulically operated coupling device selectively couples said first hydraulic pump to said transmission means.

In typical embodiments, said electrical power supply system comprises an electrical generator that is mechanically coupled to said internal combustion engine to receive mechanical power from said internal combustion engine for conversion into electrical power for said electrical power supply system. Typically, said electrical generator is coupled to said internal combustion engine by transmission means, preferably comprising a gearbox.

In preferred embodiments, the transmission means comprises multiple transmission outputs, the first hydraulic pump and the electrical generator being coupled to a respective one of the outputs. The transmission means may comprise a gearbox with multiple transmission outputs, or a multiple power take off unit.

In preferred embodiments, the electrically powered hydraulic pump includes, or is connected to, and electric motor for driving the electrically powered hydraulic pump, the electric motor being powered by said electrical power supply system.

Typically, said hydraulic power supply system is configured to provide hydraulic power to at least one other hydraulically powered component using said electrically powered hydraulic pump. Typically, said at least one other hydraulically powered component comprises one or more hydraulic actuator and/or one or more hydraulic motor and/or one or more hydraulic drive.

In typical embodiments, the apparatus includes at least one configurable component, for example one or more instance of any one or more of: a conveyor; a feeder; a screen or other material processing unit, said at least one other hydraulically powered component being part of a system, or otherwise arranged, to configure said at least one configurable component.

Optionally, said apparatus includes at least one deployable conveyor, said at least one other hydraulically powered component being part of an articulation system for deploying said at least one conveyor.

In preferred embodiments, said hydraulic power supply system is configured to use said first hydraulic pump to provide hydraulic power only to said ground-engaging conveying means.

In preferred embodiments, said electrical power supply system is configured to supply electrical power to at least one other electrically powered component, said at least one other electrically powered component typically comprising one or more electric actuator and/or one or more electric motor and/or one or more electric drive.

Typically, said ground-engaging conveying means comprises one or more wheel and/or one or more track coupled to at least one hydraulically powered drive. In preferred embodiments, said ground-engaging conveying means comprises at least one continuous track, typically comprising continuous band of tread or track plates driven by one or more wheels, the wheel(s) being driven, in use, by said at least one hydraulically powered drive.

Preferably, the hydraulic circuit that includes the electrically powered hydraulic pump is configurable to operate said hydraulically operated coupling device.

In preferred embodiments, said apparatus (or other vehicle or machine as applicable) is configurable to operate in at least one mode in which the internal combustion engine is running and the hydraulically operated coupling device is configured to transmit mechanical power to operate said first hydraulic pump, and in which the ground-engaging conveying means are driven to move the apparatus with respect to a ground surface, and is configurable to operate in at least one other mode in which the internal combustion engine is running and the hydraulically operated coupling device is configured not to transmit mechanical power to operate said first hydraulic pump. Preferably, in said at least one mode and/or in said at least one other mode, said electrical power supply system is configured to provide electrical power to said electrically powered hydraulic pump. Preferably, the hydraulic circuit that includes the electrically powered hydraulic pump is configurable to operate said hydraulically operated coupling device to cause the apparatus to adopt said at least one mode or said at least one other mode.

In typical embodiments, said hydraulically operated coupling device comprises a clutch.

In preferred embodiments, the hydraulic circuit for providing hydraulic power to said hydraulically operated coupling device is also configurable to provide hydraulic power to at least one hydraulic load, and wherein said circuit is preferably configurable either to provide hydraulic power to operate said hydraulically operated coupling device or to provide hydraulic power to operate said at least one hydraulic load.

In preferred embodiments, the hydraulic circuit that includes the electrically powered hydraulic pump includes at least one valve for controlling flow of hydraulic fluid, said at least one valve being configurable to control the flow of hydraulic fluid to said hydraulically operated coupling device in order to operate said hydraulically operated coupling device. Preferably, said at least one valve is configurable to direct hydraulic fluid to said hydraulically operated coupling device or to direct hydraulic fluid to said at least one hydraulic load. Preferably, said at least one valve comprises a diverter valve.

For tracked quarrying plant, or other tracked material processing apparatus, power in the range of 30-55kW is typically required to power the tracks (or wheels). An electric motor capable of providing the required power for tracking would be relatively large and, given space restrictions on the plant/apparatus, it is impractical to include such an electric motor when an ICE is already provided on the apparatus, particularly when the electric motor would also add to the expense. In preferred embodiments, therefore, the tracks (or wheels) are hydraulically powered. To improve efficiency of the plant, or other apparatus, it is desirable that the hydraulic circuit powering the tracks (or wheels) is not passively pumping oil without providing useful work, i.e. not operating the tracking function. Therefore a control mechanism, in particular a clutch, is provided for selectively connecting or disconnecting the hydraulic circuit that powers the tracks/wheels, in particular the hydraulic pump of said circuit, to or from the prime source of mechanical power, typically an internal combustion engine.

In preferred embodiments, electrical power provided for powering electrical components through a DC bus is used to drive an electric motor and a second hydraulic pump that may also be used for powering other hydraulic load(s), e.g. deploying or folding parts of the apparatus using actuators, or other non-tracking or non-wheel driving loads. Advantageously, a diverter valve, conveniently a 3-way diverter valve, is provided to allow hydraulic fluid, typically oil, from the second hydraulic pump to be used to actuate the hydraulic clutch to power the other hydraulic pump from the ICE gearbox. Advantageously, this other hydraulic pump is used solely for tracking (i.e. operating the wheels/tracks). The provision of hydraulically powered tracks negates the need for electrically powered tracking, for which technology is not yet robust enough (at least when size and cost are taken into account) for use with tracked quarrying plant and similar mobile machines. The power output of the electric motor provided to power the second hydraulic pump is significantly lower than would be required to perform the tracking function, and so the electric motor may be relatively small and inexpensive.

From a second aspect the invention provides a vehicle comprising:
an internal combustion engine;
an electrical power supply system;
a hydraulic power supply system; and
hydraulically powered ground-engaging conveying means for moving the vehicle with respect to a ground surface, wherein said hydraulic power supply system comprises a hydraulic circuit for providing hydraulic power to said ground-engaging conveying means, said hydraulic circuit including a first hydraulic pump, and wherein said first hydraulic pump is coupled to said internal combustion engine by a hydraulically operated coupling device that is operable to selectively transmit mechanical power to said first hydraulic pump from said internal combustion engine, or prevent transmission of mechanical power to said first hydraulic pump from said internal combustion engine, and wherein said hydraulic power supply system further includes a hydraulic circuit for providing hydraulic power to operate said hydraulically operated coupling device, said hydraulic circuit including an electrically powered hydraulic pump powered by said electrical power supply system.

From a third aspect the invention provides a hybrid power system comprising:
an internal combustion engine;
an electrical power supply system;
a hydraulic power supply system; and
a first hydraulic load, wherein said hydraulic power supply system comprises a hydraulic circuit for providing hydraulic power to said first hydraulic load, said hydraulic circuit including a first hydraulic pump, and wherein said first hydraulic pump is coupled to said internal combustion engine by a hydraulically operated coupling device that is operable to selectively transmit mechanical power to said first hydraulic pump from said internal combustion engine, or prevent transmission of mechanical power to said first hydraulic pump from said internal combustion engine, and wherein said hydraulic power supply system further includes a hydraulic circuit for providing hydraulic power to operate said hydraulically operated coupling device, said hydraulic circuit including an electrically powered hydraulic pump powered by said electrical power supply system.

The preferred features of the first aspect of the invention, including the features of dependent claims 2 to 14 appended hereto, may be provided in the vehicle of the second aspect of the invention or the hybrid power system of the third aspect of the invention.

Further advantageous aspects of the invention will be apparent to those ordinarily skilled in the art upon review of the following description of a specific embodiment and with reference to the accompanying claims.

### BRIEF DESCRIPTION OF THE DRAWINGS

An embodiment of the invention is now described by way of example and with reference to the accompanying drawings in which:
Figure 1 is a side view of a material processing apparatus embodying one aspect of the invention and which includes a power system embodying another aspect of the invention; and
Figure 2 is a block diagram of a power system embodying the invention, the power system being shown with powered components of the material processing apparatus of Figure 1.

### DETAILED DESCRIPTION OF THE DRAWINGS

Referring now to drawings there is shown, generally indicated as 10, a side view of a material processing apparatus embodying one aspect of the invention. Depending on the embodiment, the apparatus 10 may be configured to perform any one or more of a plurality of processes, such as feeding, conveying, screening, separating, crushing, breaking, recycling, shredding, demolition and/or washing, on one or more types of aggregate or other material, for example rocks, stones, gravel, sand and/or soil, or any other material, especially but not exclusively, material that is quarried, mined, excavated or requires breaking, recycling or sorting. To this end, the apparatus 10 typically includes one or more material processing unit 12 configured to perform one or more of the foregoing processes. In the illustrated embodiment, the material processing unit 12 is a screening apparatus, usually referred to as a screen or screen box. It will be understood that the invention is not limited to use with screening apparatus and may be employed with other types of material processing unit, e.g. crushers, conveyors and so on. Moreover, the invention is not limited to use with material processing apparatus and may be used with other machines, especially those with a hydraulic power system. Examples of other such machines include construction, mining, excavating, lifting, drilling and loading machines, e.g. an excavator or crane.

The apparatus 10 comprises a chassis 11 that carries the (or each) material processing unit 12. The chassis 11 may also carry or support one or more other components that facilitate use of the processing unit 12 and/or the apparatus 10 as a whole, e.g. conveyor(s), feeder(s), actuator(s) and power system(s), examples of which are described in more detail hereinafter. In preferred embodiments, the apparatus 10 includes an internal combustion engine (ICE) 34, typically a diesel engine. The engine 34 may be mounted on the chassis in any conventional manner.

In the illustrated example, the apparatus 10 includes a feeder unit 13, or hopper, for delivering material to the material processing unit 12 via a main conveyor 14. The apparatus 10 typically includes at least one conveyor 15 for receiving material processed by the processing unit 12 and outputting the received material from the apparatus 10, e.g. to a stockpile, or to another machine or apparatus. Such conveyors 15 are sometimes referred to as outfeed conveyors. In the illustrated embodiment, the apparatus 10 includes a front conveyor 15A and first and second side conveyors 15B, 15C. Typically, the conveyors 15 receive material of different grades. For example, the front conveyor 15A may receive oversize material, the first side conveyor 15B may receive mid-grade material, and the second side conveyor 15C may receive fine grade material. The conveyors 15 may receive material directly from the processing unit 12, or indirectly via one or more other conveyor (not shown) depending on the embodiment. Alternative embodiments may have more or fewer conveyors. A respective conveyor drive 16A, 16B, 16C is typically provided for each conveyor 15. A conveyor drive (not shown) is typically provided for driving the main conveyor 14. One or more screen drive 17 is provided for driving the screen 12. In alternative embodiments, one or more drives may be provided for driving the material processing unit 12, the number and nature of the drive(s) depending on the type of material processing unit.

More generally, the apparatus 10 typically includes multiple drives, at least a respective one for driving respective powered components of the apparatus 10 such as conveyor(s), feeder(s) and material processing unit(s). Each drive 16A, 16B, 16C, 17 is configured to drive the respective powered component in conventional manner. For example, the conveyor drives 16A, 16B, 16C may be configured to run a respective conveyor belt, and the screen drive 17 may be configured to vibrate the screen 12. Each drive 16A, 16B, 16C, 17 typically comprises at least one motor (e.g. rotary or linear as applicable) and/or at least one actuator. The motor(s) and/or actuator(s) may be coupled to one or more other drive components (e.g. roller(s), gear(s), belt(s) and/or shaft(s)), or drivetrain, as required to effect the operation of the drive, all of which may be conventional and is not described further herein. Each motor is typically an electric motor (AC or DC as is convenient) or a hydraulic motor. Similarly, any actuator(s) may be electrically or hydraulically powered as appropriate. In the illustrated embodiment, each of the drives 16A, 16B, 16C, 17 preferably comprises an electric motor, in particular an AC motor. In alternative embodiments any one or more of the drives 16A, 16B, 16C, 17 may comprise a hydraulic motor. Alternatively still, the material processing unit 12 may be driven by an internal combustion engine (e.g. in embodiments where it comprises a crusher).

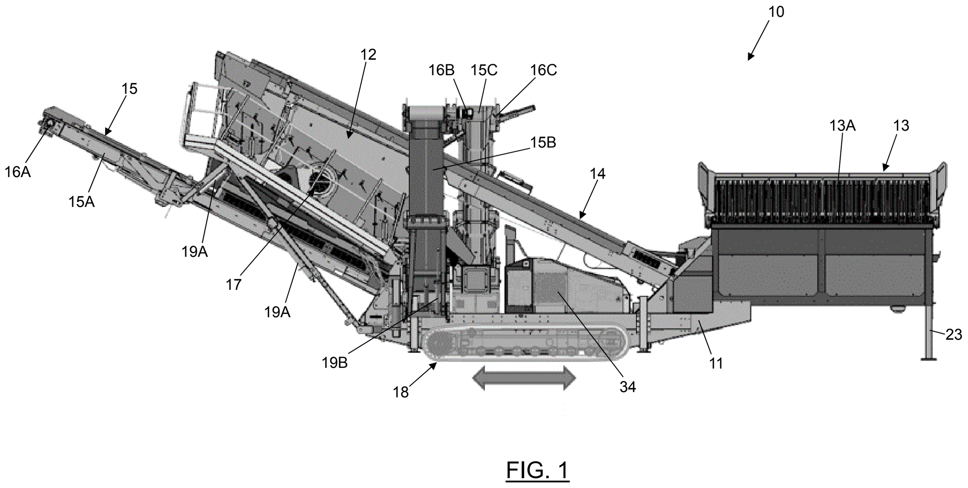

The apparatus 10 typically also includes one or more articulation system comprising one or more actuators (only some of which are visible in Figure 1), the system(s) being configured to actuate one or more components of the apparatus 10 as required, for example folding or moving conveyor(s) 15, extending and retracting feeder support leg(s) 23, and/or adjusting the position of the feeder 13 or processing unit 12, and may comprise any suitable arrangement of actuator(s) for such purposes. For example, Figure 1 shows actuators 19A for adjusting the position of the front conveyor 15A, and actuators 19B for deploying and folding side conveyor 15B. The articulation actuators are preferably hydraulic actuators but may alternatively be electric actuators. The articulation system(s) may be conventional and are not described in detail herein.

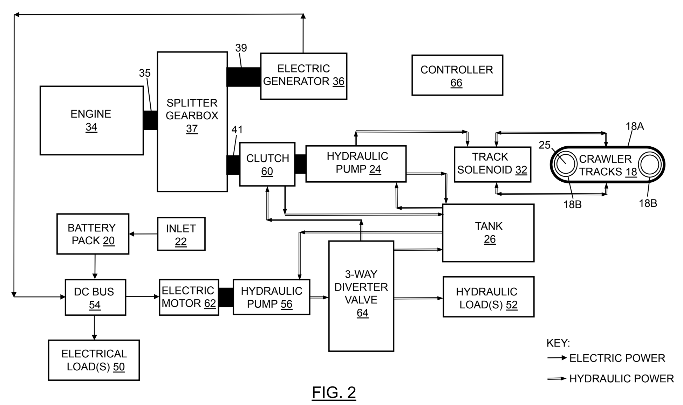

In typical embodiments, the apparatus 10 is mobile and comprises ground-engaging conveyancing means, typically comprising one or more wheels and/or tracks 18 provided on the chassis 11, for conveying the apparatus on a ground surface. Typically, respective wheel(s) and/or track(s) are provided on each side of the chassis 11. The apparatus 10 includes drive means 25 (shown in Figure 2) for driving the wheels and/or tracks 18. The drive means typically comprises one or more motor (not shown) for each wheel or track 18. In preferred embodiments, the drive means is hydraulically powered, typically comprising one or more hydraulic motor coupled to the wheel(s) and/or track(s) 18 by any suitable conventional means. In typical embodiments, the apparatus 10 has tracks 18 of the type commonly referred to as continuous track or continuous tread, comprising a continuous band 18A of tread or track plates driven by one or more wheels 18B, the wheel(s) 18B being driven by the drive means 25.

Figure 2 is a block diagram of a power system embodying one aspect of the invention and being suitable for inclusion in the apparatus 10 or other apparatus or machine that requires hybrid power. In typical embodiments, the power system is configured to provide electrical power and hydraulic power, and includes an internal combustion engine (ICE). In the embodiment of Figure 2, it is assumed that the power system is included in the apparatus 10 but only those components of the apparatus 10 that are helpful to understanding the invention are shown, in particular the ICE 34 and the wheels/tracks 18. In typical embodiments, the power system comprises an electrical system comprising an electrical power supply configured to supply electrical power to one or more electrical load (typically including at least one electric motor (e.g. of the drives 16A-16C, 17 in the example of Figure 1) and/or other electrically powered component(s), and being represented generally in Figure 2 as 50). Other electrical loads may be present depending on the configuration of the apparatus.

In preferred embodiments, the electrical power supply comprises an electrical generator 36, for example an alternator that is mechanically coupled to the ICE 34 in order to generate electrical power from mechanical power produced by the ICE. Optionally, the electrical generator 36 may comprise a motor-generator. The generator 36 is mechanically coupled to the output drive shaft 35 of the ICE 34 by any suitable mechanical transmission, or coupling, means 37. In preferred embodiments, the transmission means 37 comprises a gearbox, preferably a multiple output gearbox (or splitter gearbox), or multiple power take off unit. The generator 36 is coupled to, and driven by, an output drive shaft 39 of the transmission means 37. In use, rotation of the ICE drive shaft 35 is transmitted to the generator 36 (in particular to its rotor) by the transmission means 37 and drive shaft 39. Typically, the generator 36 produces AC electrical power, preferably 3 phase AC electrical power. Optionally, a clutch (not shown) is provided between the ICE 34 and the coupling/transmission means 37, and/or between the coupling/transmission means 37 and the generator 36.

The electrical power supply optionally comprises at least one battery 20, or battery pack, and, optionally, an electrical power inlet 22 for connecting the power system to an external electrical power supply, for example a mains power supply, or an external generator (not shown) or other AC power supply. Electrical power received from the power inlet 22 may be used to charge the battery pack 20 and/or to supply electrical power directly to one or more of the electrical loads depending on the configuration of the system.

In typical embodiments, electrical power is supplied to one or more of the electrical load(s) 50 via a DC bus 54, which may include, or be connected to, one or more power converters as required. The, or each, converter may be configured to perform any one or more of AC-DC conversion, DC-AC conversion, frequency conversion or voltage level conversion, as required, and may be conventional in configuration. For example, to enable AC electrical power from the generator 36 to be supplied to the DC bus 54, one or more AC-DC power converter may be provided in conventional manner. As required, a respective power converter may be provided for converting the type (AC-DC or DC-AC), frequency and/or voltage of the received power as required for the respective electrical load. For example, in embodiments where the drives 16A, 16B, 16C, 17 operate using AC power and the DC bus 54 supplies DC power, suitable DC-AC converter(s) may be provided. Optionally, one or more AC-DC power converter may be provided for charging the battery pack 20 with electrical power received from the generator 36 and/or the external power supply. It will be understood that in other embodiments, electrical power may be supplied to the electrical load(s) 50 in any conventional manner, not necessarily requiring a DC bus.

The power system includes a hydraulic power supply system comprising a hydraulic power supply configured to supply hydraulic power to one or more hydraulic loads.

In preferred embodiments, the hydraulic power supply system comprises a first hydraulic pump 24 connected to a hydraulic fluid reservoir 26. In the illustrated example, the hydraulic reservoir 26 serves as a source and a sink for the hydraulic fluid, but in alternative embodiments separate source and sink hydraulic reservoirs may be provided. The first hydraulic pump 24 and reservoir 26 are included in a hydraulic circuit that also includes the respective drive means 25 for driving each wheel and/or track 18. In such embodiments, the drive means 25 is hydraulically powered, typically comprising one or more hydraulic motor coupled to the wheel(s) and/or track(s) 18 by any suitable conventional means. The hydraulic circuit typically also includes a respective controller 32, e.g. comprising one or more track solenoid, for controlling the operation of the respective drive means 25. The controller 32 may take any suitable conventional form. Typically, for hydraulically powered tracks 18, the track controller 32 comprises means (e.g. one or more valves) for operating one or more hydraulic motor(s) (not shown) coupled to the tracks 18. In use, when the first hydraulic pump 24 is working, it pumps hydraulic fluid around the hydraulic circuit in order to provide hydraulic power to the drive means 25 and thereby to operate the wheel(s)/track(s) 18 to move the apparatus 10.

In preferred embodiments, the hydraulic pump 24 is directly or indirectly coupled to the ICE 34, in particular to the output drive shaft 35, so that the pump 24 may be mechanically powered, or operated, by the ICE 34. To this end, the hydraulic pump 24 may be indirectly coupled to the ICE 34 via the coupling/transmission means 37. In preferred embodiments, pump 24 is coupled to, and driven by, a second output drive shaft 41 of the coupling/transmission means 37. In use rotation of the ICE drive shaft 35 is transmitted to the rotary drive shaft of the pump 24 via the transmission means 37 and drive shaft 41.

The hydraulic power supply system is typically also configured to supply hydraulic power to one or more other hydraulic load(s) (i.e. other than the drive means 25), which typically comprise any one or more of hydraulically powered drive(s), motor(s), actuator(s) and/or other hydraulically powered component(s). In typical embodiments, these other hydraulic load(s) comprise one or more hydraulic articulation system and/or one or more hydraulic actuation system, which may comprise hydraulic actuator(s) (e.g. hydraulic ram(s)), e.g. for performing any one or more of the following tasks: folding and deploying the conveyors 15, extending and retracting feeder support leg(s) 23, adjusting the position of, or configuration of, the feeder 13 (e.g. adjusting the tipping grid 13A of the feeder 13) and/or processing unit 12), and/or one or more hydraulic motor for operating one or more component of the apparatus 10 and so on, all of which are represented generally in Figure 2 as 52. To this end, the hydraulic power supply system includes at least one other hydraulic pump 56 included in a hydraulic circuit for supplying hydraulic power to the other hydraulic load(s) 52. Conveniently, the second hydraulic pump 26 is connected to the hydraulic fluid reservoir 26. Typically, the second hydraulic pump 26 is provided in a different hydraulic circuit than the first hydraulic pump 24. In particular, the first hydraulic pump 24 is provided in a hydraulic circuit that powers the drive means 25, whereas the second hydraulic pump 26 is provided in a hydraulic circuit that operates clutch 60 (as is described in more detail hereinafter) and typically also provides hydraulic power to hydraulic load(s) 52.

In at least one mode of operation of the apparatus 10 (e.g. a transit mode or a repositioning mode) it is necessary to move the apparatus 10 using the tracks 18 (and/or wheels as applicable). In such mode(s), it is necessary to operate the first pump 24 to provide hydraulic power to the tracks 18. In at least one other mode of operation of the apparatus 10 (e.g. a material processing mode, a deployment mode, a folding mode or a reconfiguration mode) the apparatus 10 does not need to be moved using the tracks 18. However, in such other mode(s) it may be necessary to run the ICE 34, in particular to power the generator 36 to provide electrical power to the electrical power supply system and/or to provide hydraulic power to other hydraulic load(s) 52. In such other mode(s), it is advantageous (in terms of efficiency and energy consumption) not to operate the first hydraulic pump 24 so as to avoid passive pumping of hydraulic fluid by the pump 24 without producing useful work, i.e. without operating the drive means 25.

Accordingly, the coupling between the first hydraulic pump 24 and the ICE 34 comprises a coupling device 60 that is operable to selectively transmit or not transmit mechanical power to the hydraulic pump 24. In preferred embodiments, the coupling device 60 comprises a clutch. The clutch 60 is operable to selectively couple the pump 24 to the ICE 34 so that mechanical power is transmitted from the ICE 34 to the pump 24, or to decouple the pump 24 from the ICE 34 such that mechanical power is not transmitted from the ICE 34 to the pump 24, i.e. such that the pump 24 is not mechanically driven directly or indirectly by the ICE 34. In preferred embodiments, the clutch 60 is provided between the pump 24 and the transmission means 37 and is operable to selectively transmit or not transmit mechanical power from the transmission means 37 to the pump 24. Alternatively, the coupling device 60 may comprise any suitable other type of coupling, for example a hydraulic coupling, a fluid coupling, a viscous coupling or a torque converter. In any case, the preferred arrangement is such that the coupling device 60 is operable to selective transmit mechanical power to the hydraulic pump 24 directly or indirectly from the ICE 34. Typically, the clutch 60, or other coupling device as applicable. is coupled between the output drive shaft 41 of the transmission means 37 and the input drive shaft of the pump 24, and is operable to transmit, or prevent transmission of, mechanical power from the drive shaft 41 to the pump 24.

In preferred embodiments, the coupling device 60 is a hydraulically operated coupling device, preferably a hydraulically operated clutch, or hydraulic clutch. It is found that hydraulic clutches (or other hydraulically operated coupling devices) are better suited for use in embodiments of the invention than other types, e.g. electrically operated clutches, in terms of robustness and reliability. In the following description the coupling device 60 is referred to as clutch 60 although the same or similar description applies to the use of other coupling devices as would be apparent to a skilled person. The clutch 60 is operated by the hydraulic power supply system but not by the action of the first pump 24, i.e. not by a hydraulic circuit powered by the first pump 24, since the clutch 60, when open, disables or stops operation of the first pump 24. The hydraulic power supply system therefore includes a second hydraulic pump included in a hydraulic circuit with the clutch 60, the circuit being configured to operate the clutch 60. In preferred embodiments, the hydraulic pump 56 that provides hydraulic power to the other hydraulic load(s) 52 serves as the second hydraulic pump for use in operating the clutch 60. In alternative embodiments, the second hydraulic pump may be separate from the pump 56 (i.e. the hydraulic power supply system may comprise three or more hydraulic pumps as required), although it is more efficient to use the pump 56 in preferred embodiments.

In preferred embodiments, the hydraulic pump 56 that is used in the circuit that operates the clutch 60 is an electrically powered hydraulic pump, e.g. of a type commonly referred to as an electric hydraulic pump or electro-hydraulic pump, and is powered by the electrical power supply system. Typically, the second pump 56 is mechanically powered, or driven, by an electric motor 62, the electric motor 62 being powered by the electrical power supply system. Preferably, in at least one mode of operation, the second pump 56 (or more particularly the motor 62) is powered by electrical power generated by the generator 36 and/or by the battery 20. To this end, the second pump 56 (or more particularly the motor 62) may be connected to the DC bus 54. Any necessary power converter(s) may be provided as required and as would be apparent to a skilled person, e.g. depending on whether the motor 62 is an AC motor or a DC motor, and/or on its power requirements.

The hydraulic circuit for operating the clutch 60 includes at least one valve 64 for controlling the flow of hydraulic fluid to the clutch 60, thereby operating the clutch 60 between its open (or disengaging) and closed (or engaging) states (or otherwise operating the coupling device 60 between its non-power transmitting state and its power transmitting state). Typically, the clutch 60 is operated from its open (or non-power transmitting) state to its closed (or power transmitting) state by supplying hydraulic fluid to the clutch 60 and from the closed state to the open state by ceasing the supply of hydraulic fluid to the clutch 60. Typically, the hydraulic fluid is supplied to the clutch from the second hydraulic pump 56, and provides relatively low pressure, or pilot pressure, that is sufficient to close the clutch 60 and hold it in the closed state. Thereafter, the first pump 24 is coupled to the ICE 34 and provides hydraulic power to operate the drive means 25.

In preferred embodiments, a diverter valve 64 is used to operate the clutch 60. The diverter valve 64 is operable to adopt any one of a plurality of settings, or configurations. In a first configuration, the diverter valve 64 directs hydraulic fluid from the second hydraulic pump 56 to the clutch 60 thereby causing the clutch 60 to close and to transmit mechanical power to the first hydraulic pump 24. Hence, with the ICE 34 running and the diverter valve 64 in the first configuration, hydraulic power is supplied to the drive means 25. In a second configuration, the diverter valve 64 directs hydraulic fluid from the second hydraulic pump 56 to the hydraulic load(s) 52 in order to power the hydraulic load(s) 52. The preferred arrangement is such that, in the first configuration hydraulic fluid is only supplied to the clutch 60, i.e. not to the load(s) 52, and that, in the second configuration hydraulic fluid is only supplied to the hydraulic load(s) 52, i.e. not to the clutch 60. Accordingly, with the valve 64 in the second configuration, the clutch 60 is open, i.e. in its non-power transmitting state, and mechanical power is not transmitted to the first hydraulic pump 24 from the ICE 34. The diverter valve 64 typically has a third configuration, which may be referred to as a neutral configuration, in which it directs hydraulic fluid from the hydraulic pump 56 to the reservoir 26 (and not to either the clutch 60 or the load(s) 52). In typical use, while the electric motor 62 is ramping up to its working speed, the valve 64 is in the third configuration. Once working speed is obtained, the valve 64 may be cause to adopt either the first configuration or the second configuration depending on whether it is desired to power the drive means 25 (i.e. to move the apparatus using the tracks or wheels 18) or to power the hydraulic load(s) 52. When the second hydraulic pump 56 is not required, it can be deactivated by stopping the motor 62, thereby preventing unnecessarily operation of the pump 56.

In typical embodiments, a main controller 66 is provided to control the operation of the power system and/or of the apparatus 10 as is described herein. The controller 66 typically includes a user interface to allow a user to control the apparatus 10 via the controller 66. The controller 60 may communicate with other components of the system or apparatus 10 as required, or with respective sub-controllers (e.g. drive controller(s), track controller(s), valve(s) and so on) of various components of the system or apparatus 10, in any conventional manner. For example, the controller 66 may control the operation of the diverter valve 64. To this end it is preferred that the diverter valve 64 is electrically operated so that it may receive electrical control signals from the controller 66. The controller 66 may also control operation of the motor 62, typically in conjunction with controlling operation of the valve 64. For example, in response to a user providing an input indicating that the tracking function is required, the controller 66 may start the motor 62 (if it is not already running) and subsequently cause the diverter valve 64 to adopt the first configuration. Alternatively, the diverter value 64 may be mechanically, e.g. manually, operated. The motor 62 may also be manually operated. The main controller 66 may comprise one or more suitably programmed processor (e.g. a microcontroller, microprocessor or PLC).

In use, when it is desired to move the apparatus 10 using the track(s)/wheel(s) 18, the ICE 34 is running and the clutch 60 is closed to provide mechanical power to the first pump 24, which in turn provides hydraulic power to operate the track(s)/wheel(s) 18 (typically under control of the track controller 32). Advantageously, in this mode, the generator 36 is driven by the ICE 34 to supply electrical power to any electrical load(s) 50 that may require it, including the motor 62. Alternatively, the generator 36 may be disconnected from the ICE 34, or transmission 37, e.g. by a clutch (not shown) during this mode for reasons of efficiency, in which case electrical power may be provided to the motor 62 from the battery 20 as required.

When it is not required to move the apparatus 10 using the track(s)/wheel(s) 18, the clutch 60 is opened to prevent mechanical power being supplied to the first pump 24 thereby avoiding passive pumping of hydraulic fluid by the pump 24 without producing useful work. In this mode, the ICE is running and drives the generator 34 to produce electrical power for any electrical load(s) 50 that may require it, including the motor 62 thereby allowing the second hydraulic pump 56 to be operated, which in turn allows the clutch 60 to be operated, and optionally also allowing hydraulic power to be provided to operate any hydraulic load(s) 52 that may require it.

In other embodiments (not illustrated), hybrid power systems (as for example is illustrated in and described with respect to Figure 2) embodying the invention may be used with vehicles that may or may not be regarded as material processing apparatus (e.g. tanks, cranes, excavators, forklifts and so on) and/or in applications where the first hydraulic pump 24 is part of a hydraulic circuit that powers a hydraulic load other than the wheels/tracks 18 of a material processing apparatus or vehicle, e.g. static quarrying plant, mining machinery or construction machinery. Examples of applications where the hybrid power system may be used include, without limitation, vehicles (including land, sea and air vehicles), agricultural equipment (e.g. tractors, harvesters and irrigation systems), drilling rigs, pump systems, cranes and loaders.

The invention is not limited to the embodiment(s) described herein but can be amended or modified without departing from the scope of the present invention.

## Claims

1. A mobile material processing apparatus comprising:
an internal combustion engine;
an electrical power supply system;
a hydraulic power supply system; and
hydraulically powered ground-engaging conveying means for moving the apparatus with respect to a ground surface,
wherein said hydraulic power supply system comprises a hydraulic circuit for providing hydraulic power to said ground-engaging conveying means, said hydraulic circuit including a first hydraulic pump,
and wherein said first hydraulic pump is coupled to said internal combustion engine by a hydraulically operated coupling device that is operable to selectively transmit mechanical power to said first hydraulic pump from said internal combustion engine, or prevent transmission of mechanical power to said first hydraulic pump from said internal combustion engine,
and wherein said hydraulic power supply system further includes a hydraulic circuit for providing hydraulic power to operate said hydraulically operated coupling device, said hydraulic circuit including an electrically powered hydraulic pump powered by said electrical power supply system.

2. The apparatus of claim 1, wherein said first hydraulic pump is coupled to said internal combustion engine by transmission means, preferably comprising a gearbox, and wherein, preferably, the hydraulically operated coupling device selectively couples said first hydraulic pump to said transmission means.

3. The apparatus of claim 1 or 2, wherein said electrical power supply system comprises an electrical generator that is mechanically coupled to said internal combustion engine to receive mechanical power from said internal combustion engine for conversion into electrical power for said electrical power supply system, wherein, preferably said electrical generator is coupled to said internal combustion engine by transmission means, preferably comprising a gearbox, optionally a gearbox with multiple transmission outputs, or a multiple power take off unit, and wherein, optionally said first hydraulic pump is coupled to said internal combustion engine by transmission means, preferably comprising a gearbox, and wherein the transmission means comprises multiple transmission outputs, the first hydraulic pump and the electrical generator being coupled to a respective one of the outputs.

4. The apparatus of any preceding claim, wherein said electrically powered hydraulic pump includes, or is connected to, and electric motor for driving the electrically powered hydraulic pump, the electric motor being powered by said electrical power supply system.

5. The apparatus of any preceding claim, wherein said hydraulic power supply system is configured to provide hydraulic power to at least one other hydraulically powered component using said electrically powered hydraulic pump, and wherein, preferably, said at least one other hydraulically powered component comprises one or more hydraulic actuator and/or one or more hydraulic motor and/or one or more hydraulic drive, and wherein, typically, the apparatus includes at least one configurable component, for example one or more instance of any one or more of: a conveyor; a feeder; a screen or other material processing unit, said at least one other hydraulically powered component being part of a system, or otherwise arranged, to configure said at least one configurable component, and/or wherein said apparatus includes at least one deployable conveyor, said at least one other hydraulically powered component being part of an articulation system for deploying said at least one conveyor.

6. The apparatus of any preceding claim, wherein said hydraulic power supply system is configured to use said first hydraulic pump to provide hydraulic power only to said ground-engaging conveying means.

7. The apparatus of any preceding claim, wherein said electrical power supply system is configured to supply electrical power to at least one other electrically powered component, said at least one other electrically powered component typically comprising one or more electric actuator and/or one or more electric motor and/or one or more electric drive.

8. The apparatus of any preceding claim, wherein said ground-engaging conveying means comprises one or more wheel and/or one or more track coupled to at least one hydraulically powered drive, and wherein, optionally, said ground-engaging conveying means comprises at least one continuous track, typically comprising continuous band of tread or track plates driven by one or more wheels, the wheel(s) being driven, in use, by said at least one hydraulically powered drive.

9. The apparatus of any preceding claim, wherein the hydraulic circuit that includes the electrically powered hydraulic pump is configurable to operate said hydraulically operated coupling device.

10. The apparatus of any preceding claim, wherein said apparatus is configurable to operate in at least one mode in which the internal combustion engine is running and the hydraulically operated coupling device is configured to transmit mechanical power to operate said first hydraulic pump, and in which the ground-engaging conveying means are driven to move the apparatus with respect to a ground surface, and is configurable to operate in at least one other mode in which the internal combustion engine is running and the hydraulically operated coupling device is configured not to transmit mechanical power to operate said first hydraulic pump, and wherein, preferably, in said at least one mode and/or in said at least one other mode, said electrical power supply system is configured to provide electrical power to said electrically powered hydraulic pump, and wherein, preferably, the hydraulic circuit that includes the electrically powered hydraulic pump is configurable to operate said hydraulically operated coupling device to cause the apparatus to adopt said at least one mode or said at least one other mode.

11. The apparatus of any preceding claim, wherein said hydraulically operated coupling device comprises a clutch.

12. The apparatus of any preceding claim, wherein the hydraulic circuit for providing hydraulic power to said hydraulically operated coupling device is also configurable to provide hydraulic power to at least one hydraulic load, and wherein said circuit is preferably configurable either to provide hydraulic power to operate said hydraulically operated coupling device or to provide hydraulic power to operate said at least one hydraulic load.

13. The apparatus of any preceding claim, wherein the hydraulic circuit that includes the electrically powered hydraulic pump includes at least one valve for controlling flow of hydraulic fluid, said at least one valve being configurable to control the flow of hydraulic fluid to said hydraulically operated coupling device in order to operate said hydraulically operated coupling device, and wherein said at least one valve optionally comprises a diverter valve.

14. The apparatus of claim 13 when dependent on claim 12, wherein said at least one valve is configurable to direct hydraulic fluid to said hydraulically operated coupling device or to direct hydraulic fluid to said at least one hydraulic load.

15. A hybrid power system comprising:
an internal combustion engine;
an electrical power supply system;
a hydraulic power supply system; and
a first hydraulic load, said first hydraulic load optionally comprising hydraulically powered ground-engaging conveying means for moving a vehicle with respect to a ground surface, wherein said hydraulic power supply system comprises a hydraulic circuit for providing hydraulic power to said first hydraulic load, said hydraulic circuit including a first hydraulic pump, and wherein said first hydraulic pump is coupled to said internal combustion engine by a hydraulically operated coupling device that is operable to selectively transmit mechanical power to said first hydraulic pump from said internal combustion engine, or prevent transmission of mechanical power to said first hydraulic pump from said internal combustion engine, and wherein said hydraulic power supply system further includes a hydraulic circuit for providing hydraulic power to operate said hydraulically operated coupling device, said hydraulic circuit including an electrically powered hydraulic pump powered by said electrical power supply system.
